(19) Europäisches Patentamt
European Patent Office
Office européen des brevets

(11) **EP 4 585 043 A1**

(12) # EUROPÄISCHE PATENTANMELDUNG

(43) Veröffentlichungstag:
**16.07.2025   Patentblatt 2025/29**

(21) Anmeldenummer: **24151510.5**

(22) Anmeldetag: **12.01.2024**

(51) Internationale Patentklassifikation (IPC):
***A01M 7/00*** *(2006.01)*

(52) Gemeinsame Patentklassifikation (CPC):
**A01M 7/0089**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Bayer Aktiengesellschaft
51373 Leverkusen (DE)**

(72) Erfinder: **Mayer zu Eißen, Sven
58455 Witten (DE)**

(74) Vertreter: **BIP Patents
c/o Bayer Intellectual Property GmbH
Alfred-Nobel-Straße 50
40789 Monheim am Rhein (DE)**

(54) ## ZIELGENAUE APPLIKATION VON FLÜSSIGKEITEN AUF EIN ZIELOBJEKT IN EINEM LANDWIRTSCHAFTLICHEN FELD

(57)     Die vorliegende Offenbarung betrifft das technische Gebiet der Präzisionslandwirtschaft. Gegenstände der vorliegenden Erfindung sind eine Vorrichtung und ein Verfahren zur präzisen Ausbringung einer Flüssigkeit auf ein Zielobjekt in einem landwirtschaftlichen Feld.

**EP 4 585 043 A1**

**Beschreibung**

Die vorliegende Offenbarung betrifft das technische Gebiet der Präzisionslandwirtschaft. Gegenstände der vorliegenden Erfindung sind eine Vorrichtung und ein Verfahren zur präzisen Ausbringung einer Flüssigkeit auf ein Zielobjekt in einem landwirtschaftlichen Feld.

Unter dem Begriff Präzisionslandwirtschaft werden Verfahren der ortsdifferenzierten und zielgerichteten Bewirtschaftung landwirtschaftlicher Nutzflächen verstanden.

Eine Aufgabe in der Präzisionslandwirtschaft ist es, Objekte wie Pflanzen, Schädlinge oder Begleitpflanzen auf einem digital aufgenommenen Bild zu erkennen, dann eine Diagnose zu stellen und danach eine Aktion (z.B. Behandlung) durchzuführen. Ein Beispiel für eine solche Aufgabe ist das "Ultra-High-Precision-Spraying" (UHPS), bei der mit einem Traktor über ein bepflanztes Feld gefahren wird und mit der angehängten Sprühvorrichtung aufeinanderfolgende Aufnahmen vom landwirtschaftlichen Feld gemacht werden. Durch Bildverarbeitungsalgorithmen werden beispielsweise die Begleitpflanzen auf den Aufnahmen identifiziert und dann in einem Behandlungsschritt mittels eines Sprühbalkens mit einem Herbizid besprüht.

Dieser Typ von Aufgabe macht es erforderlich, einmal erkannte Zielobjekte wie Begleitpflanzen von der aktuellen Position auf dem während der Fahrt aufgenommenen Aufnahmen nachzuverfolgen, bis sich der Sprühbalken durch die Traktorbewegung kurz vor einem zu behandelnden Zielobjekt befindet, um dann im richtigen Moment ein oder mehrere Düsen zu öffnen, z.B. ein Herbizid zu sprühen und nach der erforderlichen Öffnungszeit wieder zu schließen.

Eine Herausforderung stellt bei UHPS die Planung und Aktivierung der Düsen zum richtigen Zeitpunkt und am richtigen Ort dar, denn es muß gewährleistet werden, daß die Präzision der Applikation der Flüssigkeit auf die Zielobjekte auf dem landwirtschaftlichen Feld darauf ausgerichtet ist, das Zielobjekt möglichst genau zu treffen. Für ein UHPS mit einer Treffgenauigkeit von bis 4 cm x 4 cm sind sehr präzise Düsenaktivierungzeitplannungen notwendig, denn wenn ein Traktor z.B. mit einer Geschwindigkeit von 10 km/h fährt, legt er bereits eine Wegstrecke (pro Zeiteinheit) von ca. 278 cm/Sekunde = ca. 2,8 mm/Millisekunde zurück. Wenn man kleine Zielobjekte mit Durchmessern im cm-Bereich treffen möchte, muß man daher die Öffnungszeiten auf die Millisekunde genau berechnen.

Diese und weitere Herausforderungen werden durch die Gegenstände der unabhängigen Patentansprüche gelöst. Bevorzugte Ausführungsformen finden sich in den abhängigen Patentansprüchen, der vorliegenden Beschreibung und in den Zeichnungen.

Ein erster Gegenstand der vorliegenden Erfindung ist eine Vorrichtung zum Ausbringen einer Flüssigkeit auf zumindest einen Teil eines Zielobjekts in einem landwirtschaftlichen Feld umfassend

- eine Rechen- und Steuereinheit,

- mindestens einen Vorratsbehälter zur Aufnahme der Flüssigkeit,

- mindestens eine Düse,

- Mittel zur Förderung der Flüssigkeit von dem mindestens einen Vorratsbehälter in Richtung der mindestens einen Düse,

- mindestens eine Sensoreinheit, die in Richtung des landwirtschaftlichen Feldes auf ein Zielobjekt ausgerichtet ist, und konfiguriert ist mindestens eine Aufnahme zu erzeugen,

- mindestens eine Positionsbestimmungseinheit,

wobei die Rechen- und Steuereinheit konfiguriert ist, (a) die mindestens eine Sensoreinheit zu veranlassen am Zeitpunkt $t_1$ mindestens eine Aufnahme zu erzeugen und diese mindestens eine Aufnahme zu empfangen,

wobei die Rechen- und Steuereinheit konfiguriert ist, (b) die mindestens eine Positionsbestimmungseinheit zu veranlassen am Zeitpunkt $t_1$ die Position der mindestens einen Sensoreinheit zu bestimmen und diese Positionsdaten zu empfangen,

wobei die Rechen- und Steuereinheit konfiguriert ist, (c) durch Bildverarbeitung mindestens einen Teil eines Zielobjekts - falls vorhanden - auf der mindestens einen Aufnahme zu bestimmen und zumindest einen Teil dieses Zielobjekts unter Verwendung der Positionsdaten der mindestens einen Sensoreinheit vom Zeitpunkt $t_1$ zu georeferenzieren, um den Abstand $S_1$ von der mindestens einen Düse zu dem mindestens einen Teil des Zielobjekts auf der Aufnahme vom Zeitpunkt $t_1$ zu bestimmen,

wobei die Rechen- und Steuereinheit konfiguriert ist, (d) die mindestens eine Positionsbestimmungseinheit zu veranlassen am Zeitpunkt $t_2$ die Position der mindestens einen Düse zu bestimmen und diese Positionsdaten zu empfangen, wobei der Zeitpunkt $t_2$ ein späterer Zeitpunkt als $t_1$ ist,

wobei die Rechen- und Steuereinheit konfiguriert ist, (e) den Abstand $S_2$ von der mindestens einen Düse zu dem mindestens einen Teil des Zielobjekts anhand der Positionsdaten der mindestens einen Düse vom Zeitpunkt $t_2$ und den Positionsdaten des mindestens einen georeferenzierten Teils des Zielobjektes auf der Aufnahme vom Zeitpunkt $t_1$ zu bestimmen,

wobei die Rechen- und Steuereinheit konfiguriert ist,

(f) die Geschwindigkeit $v_2$ und Richtung $r_2$ der mindestens einen Düse vom Zeitpunkt $t_2$ zumindest teilweise auf Basis der Positionsdaten der mindestens einen Düse vom Zeitpunkt $t_1$ und vom Zeitpunkt $t_2$ zu bestimmen,

wobei die Rechen- und Steuereinheit konfiguriert ist, (g) den Aktivierungszeitpunkt des Sprühvorgangs für die mindestens eine Düse auf mindestens einen Teil des Zielobjekts zumindest teilweise auf Basis des Abstands $S_2$ von der mindestens einen Düse zu dem mindestens einen Teil des Zielobjekts vom Zeitpunkt $t_2$ und der Geschwindigkeit $v_2$ und Richtung $r_2$ der mindestens einen Düse vom Zeitpunkt $t_2$ zu planen.

Ein weiterer Gegenstand der vorliegenden Offenbarung ist ein Verfahren zum Ausbringen einer Flüssigkeit auf zumindest einen Teil eines Zielobjekts in einem landwirtschaftlichen Feld umfassend die Schritte (1) bis (3):

in Schritt (1) Bewegen einer Vorrichtung zum Ausbringen einer Flüssigkeit auf zumindest einen Teil eines Zielobjekts in einem landwirtschaftlichen Feld,

in Schritt (2) Fördern einer Flüssigkeit aus mindestens einem Vorratsbehälter in Richtung mindestens einer Düse während des Bewegens,

in Schritt (3a) Veranlassen, daß mindestens eine Sensoreinheit am Zeitpunkt t1 mindestens eine Aufnahme erzeugt und diese mindestens eine Aufnahme an die Rechen- und Steuereinheit weiterleitet,

in Schritt (3b) Veranlassen, daß mindestens eine Positionsbestimmungseinheit am Zeitpunkt t1 die Position der mindestens einen Sensoreinheit bestimmt und diese Positionsdaten an die Rechen- und Steuereinheit weiterleitet,

in Schritt (3c) Bestimmen von mindestens einem Teil eines Zielobjekts - falls vorhanden - auf der mindestens einen Aufnahme durch Bildverarbeitung und Georeferenzieren des mindestens einen Teils des Zielobjektes unter Verwendung der Positionsdaten der mindestens einen Sensoreinheit vom Zeitpunkt t1, um den Abstand S1 von der mindestens einen Düse zu dem mindestens einen Teil des Zielobjekts auf der Aufnahme vom Zeitpunkt t1 zu bestimmen,

in Schritt (3d) Veranlassen, daß die mindestens eine Positionsbestimmungseinheit am Zeitpunkt t2 die Position der mindestens einen Düse bestimmt und diese Positionsdaten an die Rechen- und Steuereinheit weiterleitet, wobei der Zeitpunkt t2 ein späterer Zeitpunkt als t1 ist,

in Schritt (3e) Bestimmen des Abstand $S_2$ von der mindestens einen Düse zu dem mindestens einen Teil des Zielobjekts anhand der Positionsdaten der mindestens einen Düse vom Zeitpunkt $t_2$ und der Positionsdaten des mindestens einen georeferenzierten Teils des Zielobjektes auf der Aufnahme vom Zeitpunkt $t_1$,

in Schritt (3f) Bestimmen der Geschwindigkeit $v_2$ und der Richtung $r_2$ der mindestens einen Düse vom Zeitpunkt $t_2$ zumindest teilweise auf Basis der Positionsdaten der mindestens einen Düse vom Zeitpunkt $t_1$ und vom Zeitpunkt $t_2$,

in Schritt (3g) Planung des Aktivierungszeitpunktes des Sprühvorgangs für die mindestens eine Düse auf mindestens einen Teil des Zielobjekts zumindest teilweise auf Basis des Abstands $S_2$ von der mindestens einen Düse zu dem mindestens einen Teil des Zielobjekts vom Zeitpunkt $t_2$ und der Geschwindigkeit $v_2$ und Richtung $r_2$ der mindestens einen Düse vom Zeitpunkt $t_2$.

Die Erfindung wird nachstehend näher erläutert, ohne zwischen den Erfindungsgegenständen (Vorrichtung, Verfahren) zu unterscheiden. Die nachfolgenden Erläuterungen sollen vielmehr für alle Erfindungsgegenstände in analoger Weise gelten, unabhängig davon, in welchem Kontext (Vorrichtung, Verfahren) sie erfolgen.

Die vorliegende Erfindung offenbart eine Vorrichtung zum Ausbringen einer Flüssigkeit auf mindestens einen Teil eines Zielobjekts in einem landwirtschaftlichen Feld. D.h. die Flüssigkeit kann in einem landwirtschaftlichen Feld auf mindestens einen Teil eines Zielobjekts aufgebracht werden. Alternativ kann die Flüssigkeit im Wesentlichen auf das ganze Zielobjekt aufgebracht werden. Es ist auch möglich, daß die Flüssigkeit auf mehrere Zielobjekte appliziert wird.

Bei der Flüssigkeit kann es sich um Wasser oder eine wäßrige Lösung oder Suspension handeln. Die wäßrige Lösung oder Suspension kann einen oder mehrere Nährstoffe und/oder ein oder mehrere Pflanzenschutzmittel und/oder ein oder mehrere Mittel zur Behandlung von Saatgut enthalten.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Dabei handelt es sich meistens um einfache anorganische Verbindungen wie Nitrat ($NO3-$), Phosphat ($PO43-$) und Kalium ($K+$). Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Für die einzelnen Nährstoffe können verschiedene Verbindungen vorliegen, so kann beispielsweise Stickstoff als Nitrat, Ammonium oder Aminosäure zugeführt werden.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler). Beispiele für Pflanzenschutzmittel sind Herbizide, Fungizide und andere Pestizide (z.B. Insektizide).

Wachstumsregler dienen zum Beispiel der Erhöhung der Standfestigkeit bei Getreide durch Verkürzung der Halmlänge (Internodienverkürzer), Verbesserung der Bewurzelung von Stecklingen, Verringerung der Pflanzenhöhe durch Stauchung im Gartenbau oder der Verhinderung der Keimung von Kartoffeln. Wachstumsregler können beispielsweise Phytohormone oder deren synthetischen Analoge sein.

Der Begriff "Zielobjekt" beschreibt eine oder mehrere Pflanzen, einen oder mehrere Bereiche eines Feldes, Schädlinge oder andere Objekte. Der Begriff "mindestens einen Teil eines Zielobjekts" beschreibt vorzugsweise einen Teil (z.B. ein Blatt, Blattabschnitt, Stängel, Stängelabschnitt etc.) einer oder mehrere Pflanzen bzw. einen oder mehrere Schädlinge. In einer bevorzugten Ausführungsform handelt es sich bei den Zielobjekten um einzelne Kulturpflanzen oder (einzelne) Teile von einzelnen Kulturpflanzen oder um einzelne Gruppen von Kulturpflanzen. In einer weiteren bevorzugten Ausführungsform handelt es sich bei den Zielobjekten um einzelne Samen oder Gruppen von Samen, die in einem Feld für Kulturpflanzen ausgesät werden und/oder ausgesät worden sind. In einer weiteren bevorzugten Ausführungsform handelt es sich bei den Zielobjekten um eine oder mehrere Begleitpflanzen oder (einzelne) Teile von einzelnen Begleitpflanzen oder um einzelne Gruppen von Begleitpflanzen. In einer weiteren Ausführungsform handelt es sich bei den Zielobjekten um Pflanzenbestandteile, die von Schädlingen befallen sind. Solche Schädlinge können tierische Schädlinge, Pilze, Viren oder Bakterien sein.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Begleitpflanzen" (oftmals auch als Unkraut/Unkräuter bezeichnet) werden Pflanzen der spontanen Begleitvegetation (Segetalflora) in Kulturpflanzenbeständen, Grünland oder Gartenanlagen verstanden, die dort nicht gezielt angebaut werden und z.B. aus dem Samenpotential des Bodens oder über Zuflug zur Entwicklung kommen.

Unter dem Begriff "landwirtschaftliches Feld" wird ein räumlich abgrenzbarer Bereich der Erdoberfläche verstanden, der landwirtschaftlich genutzt wird, indem auf einem solchen Feld Kulturpflanzen angepflanzt, gegebenenfalls mit Nährstoffen versorgt und geerntet werden.

Der Begriff "Rechen- und Steuereinheit" steht für Komponenten eines Computers oder Prozessors zur Durchführung von arithmetischen und logischen Operationen sowie der Kontrolle von Abläufen von Befehlen und Operationen. In modernen Computern sind Recheneinheit und Steuereinheit oft eng miteinander verbunden und bilden gemeinsam die sogenannte "CPU" ("Central Processing Unit"). Diese beiden Einheiten arbeiten zusammen, um die Verarbeitung und Ausführung von Befehlen in einem Computer zu ermöglichen. Es ist auch möglich, daß zumindest bestimmte Funktionen über "Cloud"-basiertes "Computing" durchgeführt werden.

Die Flüssigkeit befindet sich vor dem Ausbringen in einem Vorratsbehälter. Es können mehrere Vorratsbehälter vorhanden sein. Es können mehrere (verschiedene) Flüssigkeiten ausgebracht werden. Die Flüssigkeit wird über eine Düse oder mehrere Düsen auf zumindest einen Teil des Zielobjekts ausgebracht. In einer Ausführungsform ist die mindestens eine Düse ein Bestandteil eines Inkjet-Druckkopfes. In der Ausführungsform wird also die Technik, die bei Inkjet-Druckern eingesetzt, um die Flüssigkeit auf mindestens einen Teil des Zielobjekts auszubringen. Die Verwendung der Technik von Inkjet-Druckern in der Landwirtschaft ist beispielsweise beschrieben in M.- Idbella et al.: Structure, Functionality, Compatibility with Pesticides and Beneficial Microbes, and Potential Applications of a New Delivery System Based on Ink-Jet Technology, Sensors 2023, 23(6), 3053. In einer bevorzugten Ausführungsform werden mehrere Düsen verwenden, die bevorzugt von einem Balken oder eine Leiste umfaßt sind (nachfolgend als "Sprühbalken" bezeichnet).

In einer weiteren bevorzugten Variante umfaßt die erfindungsgemäße Vorrichtung eine Vielzahl von Düsen. Der Begriff Vielzahl bedeutet vorzugsweise mehr als zehn. Die Düsen sind vorzugsweise so angeordnet, daß jede Düse Flüssigkeit in einem Bereich mit einer maximalen lateralen Ausdehnung von weniger als 20 cm, vorzugsweise weniger als 10 cm, am meisten bevorzugt von weniger als 5 cm appliziert. Die Vielzahl an Düsen kann beispielsweise nebeneinander entlang eines Sprühbalkens angeordnet sein, der sich quer (z.B. in einem Winkel von 90°) zu der Bewegungsrichtung der Vorrichtung erstreckt. Jeder Düse kann mindestens eine Sensoreinheit (z.B. eine Kamera) zugeordnet sein. Bei einer solchen Ausführungsform besteht die Möglichkeit, daß ein Zielobjekt den Sichtbereich der mindestens einen Sensoreinheit bei einer Kurvenfahrt verlässt und deshalb die benachbarte Sensoreinheit aktiviert wird.

Zum Ausbringen wird die Flüssigkeit mit Fördermitteln aus dem mindestens einen Vorratsbehälter in Richtung der mindestens einen Düse befördert. Zur Förderung der Flüssigkeit kann beispielsweise eine Pumpe eingesetzt werden.

Die erfindungsgemäße Vorrichtung umfaßt mindestens eine Sensoreinheit. Eine Sensoreinheit umfaßt mindestens einen Sensor. Ein "Sensor" ist ein technisches Bauteil, das bestimmte physikalische und/oder chemische Eigenschaften und/oder die stoffliche Beschaffenheit seiner Umgebung qualitativ oder als Meßgröße quantitativ erfassen kann. Diese Größen werden mittels physikalischer oder chemischer Effekte erfaßt und in ein weiter verarbeitbares, meist elektrisches oder optisches Signal umgeformt. Eine Sensoreinheit kann Mittel zur Verarbeitung von Signalen enthalten, die der mindestens eine Sensor liefert. Eine Sensoreinheit kann Mittel zum Übermitteln und/oder Weiterleiten von Signalen und/oder Informationen (z.B. an die Steuereinheit) umfassen. Die eine oder die mehreren Sensoreinheiten können Bestandteil des Systems sein und/oder mit diesem über eine Kommunikationsverbindung (z.B. über Funk) verbunden sein. Der eine oder die mehreren Sensoreinheiten können konfiguriert sein, kontinuierlich oder in definierten zeitlichen Abständen oder bei Eintritt definierter Ereignisse ein oder mehrere Signale an die Rechen- und Steuereinheit zu übermitteln, auf deren Basis die Rechen- und Steuereinheit die weiteren Schritte beispielsweise zur Planung des Aktivierungszeitpunktes des Sprühvorgangs für die mindestens eine Düse durchführt.

Die mindestens eine Sensoreinheit, die in Richtung des landwirtschaftlichen Feldes auf ein Zielobjekt ausgerichtet ist, umfaßt vorzugsweise eine Kamera oder mehrere Kameras. Die Kameraachse der mindestens einen Kamera als Bestandteil der erfindungsgemäßen Vorrichtung ist vorzugsweise im Wesentlichen senkrecht zum Boden ausgerichtet ist (d.h. die mindestens eine Kamera zeigt nach "unten" oder "geradeaus" in Bezug auf den Boden). Vorzugsweise befindet sich die mindestens eine Kamera (in Fahrtrichtung) vor der mindestens einen Sprüheinheit. Dieser Abstand ist vorzugsweise zwischen 30 cm und 100 cm noch bevorzugter zwischen 40 und 60 cm. Die erfindungsgemäß eingesetzte Kamera kann einen Bildsensor und optische Elemente umfassen. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD- (CCD = charge-coupled device) oder CMOS-Sensoren (CMOS = complementary metal-oxide-semiconductor). Die optischen Elemente (Linsen, Blenden und dergleichen) dienen einer möglichst scharfen Abbildung eines Objekts auf dem Bildsensor.

Die Kamera kann durch die Rechen- und Steuereinheit veranlaßt werden, in definierten Zeitabständen oder kontinuierlich Bildaufnahmen von mindestens einem Teil eines Zielobjekts (Aufzählungspunkt (a) bei der erfindungsgemäßen Vorrichtung und Schritt (3a) beim erfindungsgemäßen Verfahren) zu erzeugen. Der mindestens eine Teil eines Zielobjekts kann beispielsweise eine Kulturpflanze, eine Begleitpflanze und/oder ein Schädling sein. Dabei kann es sich bei der Rechen- und Steuereinheit um die Rechen- und Steuereinheit der erfindungsgemäßen Vorrichtung oder um eine separate Rechen- und Steuereinheit handeln. Vorzugsweise wird dafür die Rechen- und Steuereinheit der erfindungsgemäßen Vorrichtung verwendet. Jede Aufnahme wird mit einem Zeitstempel gekennzeichnet, um den genauen Zeitpunkt der Aufnahme des Bildes zu dokumentieren. Es kann auch vorkommen, daß auf einer einzelnen Aufnahme kein Teil eines Zielobjekts vorhanden ist und beispielsweise nur der Boden bzw. das landwirtschaftliche Feld ohne einen Teil eines Zielobjekts erfaßt wird.

Die erfindungsgemäße Ausgestaltung der Vorrichtung umfaßt neben der oben beschriebenen mindestens einen Sensoreinheit auch mindestens eine Positionsbestimmungseinheit. Die mindestens eine Positionsbestimmungseinheit kann auch einen oder mehrere Sensoren umfassen. Die mindestens eine Positionsbestimmungseinheit der Vorrichtung ist so konfiguriert, daß zu dem jeweiligen Zeitpunkt, zu dem die mindestens eine Sensoreinheit eine Bildaufnahme erzeugt, die Positionsdaten der mindestens einen Sensoreinheit (der Kamera und vorzugsweise die Positionsdaten des Kameralinsenmittelpunkts) erfaßt werden und diese Information an die Rechen- und Steuereinheit der Vorrichtung weitergegeben werden (Aufzählungspunkt (b) bei der Vorrichtung und Schritt (3b) beim Verfahren).

Die mindestens eine Positionsbestimmungseinheit kann beispielsweise einen Empfänger eines Satellitennavigationssystems (GNSS, Global Navigation Satellite System) umfassen, umgangssprachlich auch als GPS-Empfänger bezeichnet. Das Global Positioning System (Abk.: GPS), offiziell NAVSTAR GPS, ist ein Beispiel eines globalen Satellitennavigationssystems zur Positionsbestimmung; andere Beispiele sind GLONASS, Galileo und Beidou. Die Satelliten eines solchen Satellitennavigationssystems teilen über Funkcodes ihre genaue Position und Uhrzeit mit. Zur Positionsbestimmung muß ein Empfänger (der "GPS-Empfänger") die Signale von mindestens vier Satelliten gleichzeitig empfangen. Im Empfänger werden die Pseudo-Signallaufzeiten gemessen und daraus die aktuelle Position ermittelt.

In einer bevorzugten Ausführungsform werden mindestens zwei GNSS Empfänger eingesetzt. Vorzugsweise erfolgt die Positionsbestimmung der mindestens einen Düse der Vorrichtung mit einer "Moving-baseline"-Differential-GNSS-Installation (DGPS), die eine Genauigkeit der Positionen-Bestimmung von unter 10 mm ermöglicht und Update-Raten zwischen 8 und 100 Hz erreicht. Bei der "Moving-Baseline"-DGPS-Installation werden zwei GNSS-Empfänger mit angeschlossenen GNSS-Sensoren in festem Abstand auf der erfindungsgemäßen Vorrichtung angebracht. Eine davon nimmt die Rolle einer "Moving Baseline" ein, die andere die des "Rovers". Beispielsweise können diese beiden Komponenten an den entgegengesetzten Enden des Sprühbalkens installiert werden. Mit dieser Technologie können DGPS-Korrekturdaten während der Fahrt erzeugt werden, die die oben angesprochenen Genauigkeit ermöglichen. Da der Abstand der mindestens einen Sensoreinheit, (vorzugsweise der Kamera-Linsen) und der mindestens einen Düse zu den GNSS-Empfängern auf der erfindungsgemäßen Vorrichtung fest ist, können deren Positionen auf Basis der Position der GNSS-Empfänger mit nur wenigen Rechenoperationen sehr schnell bestimmt werden. D.h. sobald die Positionsbestimmungseinheit die Position der mindestens einen Sensoreinheit bestimmt hat, ist auch die Position der mindestens einen Düse bekannt. Analog dazu ist bei einer Positionsbestimmung der mindestens einen Düse zu einem bestimmten Zeitpunkt, die Position der mindestens einen Sensoreinheit zu demselben Zeitpunkt ebenfalls bekannt.

Die Rechen- und Steuereinheit der Vorrichtung (bzw. des Verfahrens) empfängt die mindestens eine Aufnahme vom Zeitpunkt t1 von der Sensoreinheit und die Positionsdaten vom Zeitpunkt t1 von der mindestens einen Positionsbestimmungseinheit. Die Rechen- und Steuereinheit ist konfiguriert, die Aufnahmen durch Bildverarbeitung zu verarbeiten, um zumindest einen Teil eines Zielobjekts - falls vorhanden - in den Aufnahmen zu erkennen, z.B. eine definierte Pflanze (z.B. eine Begleitpflanze), einen Teil einer definierten Pflanze (z.B. ein Blatt), einen Schädling, eine mit einem Schädling befallene Pflanze und/oder ein anderes Objekt (Aufzählungspunkt (c) bei der Vorrichtung und Schritt (3c) beim Verfahren). Methoden und Vorrichtungen zum Erkennen von Objekten in Bildaufnahmen sind vielfältig im Stand der Technik beschrieben (siehe z.B.: WO2020120802A1, WO2020120804A1, WO2020229585A1). Für die Bildverarbeitung zur Objekterkennung können unterschiedliche Methoden angewendet werden wie beispielsweise eine Merkmalsextraktion mit Deep Learning Modellen wie neuronalen Netzen, Support Vector Machines (SVM), Entscheidungsbäume etc. Weitere mögliche einsetzbare Methoden sind die farbgestützte Erkennung, die Texturanalyse, die formbasierte Erkennung, die Spektralanalyse, die Farbhistogrammanalyse, die Histogramm von Orientierten Gradienten Methode (HOG), morphologische Operationen oder eine Kombinationen dieser Methoden.

In einer bevorzugten Ausführungsform ist die Rechen- und Steuereinheit konfiguriert, die Bestimmung des mindestens einen Teils des Zielobjektes auf der Aufnahme mit maschinellem Lernen durchzuführen. Die Modelle, die bei dieser Bildverarbeitung verwendet werden, basieren vorzugsweise auf Deep-Learning Techniken, wie neuronalen Netzen (beispielsweise einem Convolutional Neural Network (CNN)). Ein solches Modell wird mit annotierten Bildern trainiert, um zu lernen, wie es zwischen verschiedenen Klassen, wie z.B. einer Begleitpflanze und anderen Pflanzen, unterscheiden kann. Nach dem Training kann ein solches Modell mit neuen Aufnahmen angewendet werden. Eine Aufnahme, die von der mindestens einen Sensoreinheit empfangen wird, kann für die Verwendung mit dem Modell vorverarbeitet werden ("preprocessing"). Die Vorverarbeitung umfaßt gängige Methoden wie Normalisierungs- oder Skalierungsschritte, das Entfernen von Rauschen, das Ändern von Kontrasten oder andere Methoden zur Verbesserung der Datenqualität sowie das Konvertierten der Aufnahme in das Eingabeformat des Modells. Das Modell teilt jedes Pixel im Bild einer bestimmten Klasse zu, beispielsweise ob das Pixel zu einem Zielobjekt, einem Nicht-Zielobjekt, oder zum Hintergrund gehört. Dieses Verfahren wird auch als semantische Segmentierung bezeichnet. Die semantische Segmentierung hinsichtlich der Identifizierung von Pflanzen auf einem Feld ist im Stand der Technik beschrieben (siehe beispielsweise WO 19226869 A1). Im Rahmen der Nachverarbeitung ("postprocessing") der klassifizierten Daten auf Pixelebene des Modells können Transformationen oder Analyseoperation wie die Generierung von Pixelmasken (z.B. binäre Darstellung von Pixeln die zum erkannten Zielobjekt gehören oder nicht), die Generierung von "Bounding Boxen" (rechteckiger Rahmen um ein erkanntes Zielobjekt), die Bestimmung des Flächenschwerpunkts (Mittelpunkt der Fläche des erkannten Zielobjekts der als repräsentativer Punkt für das erkannte Zielobjekt verwendet werden kann), die Generierung von einem Umriß-Polygon (eine Serie von Punkten die die Kontur des erkannten Zielobjekts beschreiben) durchgeführt werden. Neben der semantischen Segmentierung können aber auch "Object-Detection" Algorithmen wie beispielsweise Yolo, SSD, Faster-RCNN etc. eingesetzt werden. Mit diesen Algorithmen ist es möglich - anstelle des Zwischenweges über die Pixelmasken - direkt "Bounding Boxen" für das erkannte Zielobjekt zu generieren.

Bevorzugt wird durch die Bildanalyse das ganze Zielobjekt erkannt. Es kann aber vorkommen, daß auf der Aufnahme nur ein Teil eines Zielobjektes vorhanden ist und nur dieser Teil erkannt werden kann. Die oben genannten Bildverarbeitungsverfahren inklusive der "pre-" und "postprocessing" Schritte können auch durchgeführt werden, wenn nur ein Teil eines Zielobjektes auf der Aufnahme erkannt wurde.

Nach der Bildverarbeitung wird zumindest ein Teil des erkannten Zielobjekts mit den Positionsdaten der mindestens einen Sensoreinheit vom Zeitpunkt t1 georeferenziert (Aufzählungspunkt (c) bei der Vorrichtung und Schritt (3c) beim Verfahren). In einer Ausführungsform der erfindungsgemäßen Vorrichtung wird zumindest eine Pixel-Koordinate des zumindest einen Teil des erkannten Zielobjekts in Positionsdaten auf dem landwirtschaftlichen Feld umgerechnet. In einer weiteren bevorzugten Ausführungsform ist dieser eine Pixel-Koordinate der Flächenschwerpunkt des erkannten Zielobjekts. In einer weiteren bevorzugten Ausführungsform werden mehrere Pixel-Koordinaten des erkannten Zielobjekts georeferenziert, wie beispielsweise alle Punkte der Pixelmaske, die zum erkannten Zielobjekt zugeordnet wurden oder alle Punkte innerhalb der "Bounding Box" oder des Umriß-Polygons des erkannten Zielobjekts. Anhand des georeferenzierten Punktes bzw. der georeferenzierten Punkte, sowie der Kenntnis von optischen Parametern der Kamera (z.B. der Öffnungswinkel der Kamera, die vertikale und horizontale Auflösung der Kamera) und der Kenntnis von dem Abstand der Kamera (bevorzugt von der Kameralinse bzw. von dem Kameralinsenmittelpunkt) zum Boden des landwirtschaftlichen Feldes kann der Abstand S 1 von der mindestens einen Düse zu dem mindestens einen Teil des Zielobjekts auf der Aufnahme vom Zeitpunkt t1 bestimmt werden. In einer bevorzugten Variante der Erfindung wird diese Berechnung mit Hilfe folgender Formeln durchgeführt:

$$S_y = \frac{y}{2H \tan\frac{\alpha_y}{2}} \quad ,$$

$$(1)$$

$$S_x = \frac{x}{2H \tan\frac{\alpha_x}{2}} \quad ,$$

$$(2)$$

wobei in Formel (1) $S_y$ für die Anzahl Pixel pro Einheit Höhe auf dem Bildsensor der Kamera (vertikale Auflösung pro Höheneinheit), y für die vertikale Auflösung der Kamera, H für den Abstand von der Kameralinse zum Boden und $\alpha_y$ für den vertikalen Öffnungswinkel der Kamera steht,

wobei in Formel (2) $S_x$ für die Anzahl Pixel pro Einheit Breite auf dem Bildsensor der Kamera (horizontale Auflösung pro Breiteneinheit), x für die horizontale Auflösung der Kamera, H für den Abstand von der Kameralinse zum Boden und $\alpha_x$ für den horizontalen Öffnungswinkel der Kamera steht,

wobei man ausgehend von der Pixel-Koordinate der zumindest einen Aufnahme über den jeweiligen Kehrwert von $S_y$ und $S_x$ die Positionsdaten der zumindest einen Pixel-Koordinate des mindestens einen Teil des Zielobjektes auf dem landwirtschaftlichen Feld berechnet.

Die Rechen- und Steuereinheit ist weiter konfiguriert, die mindestens eine Positionsbestimmungseinheit zu veranlassen am Zeitpunkt t2 die Position der mindestens einen Düse zu bestimmen und diese Positionsdaten zu empfangen, wobei der Zeitpunkt t2 ein späterer Zeitpunkt als t1 ist (Aufzählungspunkt (d) bei der Vorrichtung und Schritt (3d) beim Verfahren). In einer bevorzugten Ausführungsform ist die Vorrichtung dabei in Bewegung, damit die Positionsdaten der mindestens einen Düse am Zeitpunkt t1 und Zeitpunkt t2 nicht gleich sind. In einer weiteren bevorzugten Variante bewegt sich die Vorrichtung auf das Zielobjekt zu.

Die Rechen- und Steuereinheit ist weiter konfiguriert, den Abstand S2 von der mindestens einen Düse zu dem mindestens einen Teil des Zielobjekts anhand der Positionsdaten der mindestens einen Düse vom Zeitpunkt t2 und der Positionsdaten des mindestens einen georeferenzierten Teils des Zielobjektes auf der Aufnahme vom Zeitpunkt t1 zu bestimmen, (Aufzählungspunkt (e) bei der Vorrichtung und Schritt (3e) beim Verfahren).

Die Rechen- und Steuereinheit ist weiter konfiguriert, die Geschwindigkeit v2 und Richtung r2 der mindestens einen Düse vom Zeitpunkt t2 zumindest teilweise auf Basis der Positionsdaten der mindestens einen Düse vom Zeitpunkt t1 und vom Zeitpunkt t2 zu bestimmen (Aufzählungspunkt (f) bei der Vorrichtung und Schritt (3f) beim Verfahren). Dabei ist zu berücksichtigen, daß beim Vorhandensein von mehreren Düsen, jede der Düsen - bei einer Kurvenfahrt der Vorrichtung - eine andere Geschwindigkeit aufweisen kann. Die Geschwindigkeit v2 von der mindestens einen Düse kann durch die vorhandene Kenntnis der zurückgelegten Strecke der Vorrichtung zwischen t1 bis t2 bestimmt werden. Die Richtung r2 der mindestens einen Düse vom Zeitpunkt t2 kann durch Kenntnis der zwei unterschiedlichen Positionsdaten der mindestens einen Düse vom Zeitpunkt t1 und vom Zeitpunkt t2 bestimmt werden. Die Richtung zwischen zwei Koordinatenpunkten wird üblicherweise als Azimut oder Kurs ausgedrückt. Der Azimut ist der Winkel in Grad, gemessem im Uhrzeigersinn von der Nordrichtung aus.

Die Rechen- und Steuereinheit ist weiter konfiguriert ist, den Aktivierungszeitpunkt des Sprühvorgangs für die mindestens eine Düse auf mindestens einen Teil des Zielobjekts zumindest teilweise auf Basis des Abstands S2 von der mindestens einen Düse zu dem mindestens einen Teil des Zielobjekts vom Zeitpunkt t2 und der Geschwindigkeit v2 und Richtung r2 der mindestens einen Düse vom Zeitpunkt t2 zu planen (Aufzählungspunkt (g) bei der Vorrichtung und Schritt (3g) beim Verfahren).

In einer bevorzugten Ausführungsform ist die Rechen- und Steuereinheit weiter konfiguriert ist, die mindestens eine Düse zumindest teilweise auf der Basis des geplanten Aktivierungszeitpunktes des Sprühvorgangs zu aktivieren und die Flüssigkeit auf mindestens einen Teil eines Zielobjekts zu applizieren (Aufzählungspunkt (h) bei der Vorrichtung und Schritt (3h) beim Verfahren).

In einer weiteren bevorzugten Ausführungsform ist die Rechen- und Steuereinheit konfiguriert, die in den Aufzählungspunkten (a) bis (f) genannten Schritte (Schritte 3a bis 3f des Verfahrens) und die Berechnung der jeweiligen Parameter Si, ti,, vi, ri iterativ (i) durchzuführen. Der Aktivierungszeitpunkt des Sprühvorgangs für die mindestens eine Düse auf mindestens einen Teil eines Zielobjekts in dem in Aufzählungspunkt (g) genannten Schritt kann durch jeden iterativen Schritt gegebenenfalls angepaßt werden. Vorzugsweise wird bei einer iterativen Durchführung das Zielobjekt vollständig durch die Bildanalyse erkannt. Dadurch ist es möglich den Aktivierungszeitpunkt des Sprühvorgangs für das vollständige Zielobjekt zu planen und auch den Sprühvorgang entsprechend für das vollständige Zielobjekt durchzuführen.

In einer bevorzugten Ausführungsform werden für die Berechnungen (Aufzählungspunkt (c), (e), (f) und (g) sowie (c'), (e'), (f) und (g') bei der Vorrichtung und Schritt (3c), (3e), (3f) und (3g), sowie (3c'), (3e'), (3f) und (3g') beim Verfahren) Meßdaten (Aufnahmen und - falls vorhanden - gemessene Positionsbestimmungsdaten) aus mehreren Iterationszyklen verwendet. Vorzugsweise werden Meßdaten von zwischen 2 - 100, bevorzugter zwischen 3 - 50 und noch bevorzugter zwischen 3 - 10 Iterationzyklen verwendet. Durch die größere Datenbasis können die Mess- und Analysedaten stabilisiert werden. Gleichzeitig wird durch die Begrenzung der Iterationszyklen vermieden, daß zu alte, mittlerweile irrelevante Daten für die Berechnungsschritte verwendet werden.

In einer weiteren bevorzugten Variante der vorliegenden Vorrichtung werden mindestens zwei Positionsbestimmungseinheiten eingesetzt. Davon umfaßt eine Positionsbestimmungseinheit einen GNSS (Global Navigation Satellite System) Empfänger und die zweite Positionsbestimmungseinheit basiert auf visueller Odometrie-Technologie.

In einer weiteren bevorzugten Ausführungsform ist die Rechen- und Steuereinheit konfiguriert, vor und/oder während einer Positionsdatenbestimmung mit dem GNSS Empfänger zu überprüfen, ob die Signalstärke des GNSS Empfänger ein vordefiniertes Schwellenwertniveau erreicht oder überschreitet. Falls das vordefinierte Schwellenwertniveau nicht erreicht wird, wird die Positionsbestimmung von der Positionsbestimmungseinheit bestimmt, die eine visuelle Odometrie-Technologie umfaßt. Die Definition eines geeigneten Schwellenwertniveaus für einen GNSS Empfänger hängt von verschiedenen Faktoren wie beispielsweise der Empfindlichkeit des GNNS Empfängers ab. Ein möglicher Schwellenwert könnte beispielsweise im Bereich von -130 dBm (Dezibel Milliwatt) bis -150 dBM liegen.

In einer bevorzugten Variante wird die Signalstärke vor jeder Durchführung der in Aufzählungspunkt (b) und (d) bei der Vorrichtung beschriebenen Schritte (Schritt (3b) und (3d) beim Verfahren) gemessen und geprüft, ob die Signalstärke des GNSS Empfängers das vordefinierte Schwellenwertniveau erreicht oder überschreitet. Vorzugsweise wird dies nur vor jeder Durchführung des in Aufzählungspunkt (b) bei der Vorrichtung beschriebenen Schritts (Schritt (3b) beim Verfahren) durchgeführt. Falls beispielsweise am Zeitpunkt $t_{i-1,1}$ die Positionsdatenbestimmung mit visueller Odometrie durchgeführt wurde und am Zeitpunkt $t_{i,1}$ festgestellt wird, daß die Signalstärke des GNSS Empfängers nun das Schwellenwertniveau erreicht, wird die Positionsdatenbestimmung für den Zeitpunkt $t_{i,1}$ durch den GNSS Empfänger erfolgen. Bei der nächsten Iteration $t_{i+1,1}$ wird wiederum geprüft, ob die Signalstärke ausreicht, um den GNSS Empfänger einsetzen zu können oder ob wieder auf visuelle Odometrie gewechselt werden muß. Das Umschalten zwischen den beiden Positionsbestimmungseinheiten erfolgt daher vorzugsweise möglichst nahtlos, um eine unterbrechungsfreie Positionsbestimmung sicherstellen zu können. Dabei wird vorzugsweise zuerst versucht, die Positionsbestimmung über den mindestens einen GNSS Empfänger durchzuführen.

Die visuelle Odometrie basiert auf der Verfolgung der Bewegung und der Position eines Objektes (vorzugsweise zumindest einen Teil eines Zielobjektes) im Feld anhand der Aufnahmen von der mindestens einen Kamera. Durch eine Bildanalyse aufeinanderfolgenden Aufnahmen identifiziert die Rechen- und Steuereinheit visuelle Merkmale, die stabil und eindeutig identifizierbar sind. Dies sind vorzugsweise charakteristische Punkte von zumindest einem Teil eines Zielobjekts. Die Bildanalyse verfolgt die Bewegung der identifizierten Merkmale zwischen aufeinanderfolgenden Aufnahmen. Dies kann durch Methoden wie optischer Fluß oder "Feature-Matching"-Algorithmen erreicht werden. Basierend auf der Veränderung der Position der identifizierten Merkmale kann die Bewegung des Objektes (vorzugsweise zumindest einem Teil eines Zielobjekts) geschätzt werden. Diese Schätzung kann die Translation (Bewegung in x, y und z-Richtung) sowie die Rotation (Drehung um die Achsen) umfassen. Es ist auch möglich, daß eine simultane Lokalisierung und Kartierung (SLAM, "simultaneous localization and mapping") integriert ist, bei dem neben der unmittelbaren Positionsbestimmung auch ein relatives Koordinatensystem (Karte der Umgebung) erstellt wird. Die visuelle Odometrie Technologie kann weitere Sensoreinheiten umfaßen um die Genauigkeit der Positionsbestimmung mit dieser Technologie mittels Sensorfusion zu verbessern. Solche weiteren Sensoreinheiten umfassen beispielsweise Inertialsensoren wie Gyroskope und Beschleunigungsmesser. Eine präzise Kalibrierung der mindestens einen Kamera und möglicher weiterer Sensoreinheiten ist erforderlich um eine genaue Positionsbestimmung zu gewährleisten.

In einer Ausführungsform (bei der Verwendung der visuellen Odometrie zur Positionsbestimmung) ist die Rechen- und Steuereinheit konfiguriert, die mindestens eine Sensoreinheit zu veranlassen am Zeitpunkt $t_{i-1,1}$ und $t_{i,1}$ jeweils mindestens eine Aufnahme zu erzeugen, wobei der Zeitabstand zwischen $t_{i-1,1}$ und $t_{i,1}$ so kurz gewählt wird, daß sich die Aufnahmen überlagern (Schritt (a')), wobei die Rechen- und Steuereinheit konfiguriert ist am Zeitpunkt $t_{i,2}$ - und abweichend von den beschriebenen Schritten in Aufzählungspunkten (c) und (e) bis (g) - in den alternativen Schritten (c'), (e') und (f) - zumindest teilweise auf Basis dieser Aufnahmen zumindest eine der Daten ausgewählt aus der Gruppe von Abstand $S_{i,2}$ von der mindestens einen Düse zu dem mindestens einen Teil des Zielobjekts vom Zeitpunkt $t_{i,2}$, Geschwindigkeit $v_i,1$ der mindestens einen Düse vom Zeitpunkt $t_{i,1}$, Richtung $r_{i,1}$ der mindestens einen Düse vom Zeitpunkt $t_{i,1}$ zu bestimmen. Die Rechen- und Steuereinheit ist weiter konfiguriert, (im alternativen Schritt (g')) den Aktivierungszeitpunkt des Sprühvorgangs für die mindestens eine Düse auf mindestens einen Teil eines Zielobjekts zumindest teilweise auf Basis des Abstands Si,2 von der mindestens einen Düse zu dem mindestens einen Teil des Zielobjekts vom Zeitpunkt ti,2 und der Geschwindigkeit vi, 1 und Richtung ri,1 der mindestens einen Düse vom Zeitpunkt ti, 1 zu planen. Im optionalen Schritt (h') ist die Rechen- und Steuereinheit konfiguriert, die mindestens eine Düse zumindest teilweise auf der Basis des geplanten Aktivierungszeitpunktes des Sprühvorgangs in Schritt (g') zu aktivieren und die Flüssigkeit auf den mindestens einen Teil des Zielobjekts zu applizieren.

In einer bevorzugten Ausführungsform der Vorrichtung, ist die Rechen- und Steuereinheit konfiguriert (im alternativen Schritt (c')) Übereinstimmungen der Aufnahmen von den Zeitpunkten ti-1,1 und ti,1 zu erkennen und (im alternativen Schritt (e')) die relative Bildbewegung und den Rotationswinkels auf Basis dieser Daten zu berechnen. In einer weiteren bevorzugten Variante ist die Rechen- und Steuereinheit konfiguriert, zumindest eine übereinstimmende Pixelbewegung (bevorzugt zumindest ein Pixel zumindest eines Teils eines Zielobjekts) des aktuellen (i) Bildes im Vergleich zum Bild aus der vorherigen Iteration (i-1) zu erkennen. Dieses Vorgehen wird in der "Computer Vision" "Image Registration" genannt. Die relative Bewegung und die Rotation von diesem zumindest einen übereinstimmenden Pixel kann beispielsweise mit einer Transformationsmatrix bestimmt werden. Im alternativen Schritt (f) ist die Rechen- und Steuereinheit konfiguriert, auf Basis der bestimmten relativen Bewegung und des Rotationswinkels zumindest eine der Daten ausgewählt aus der Gruppe von: der Abstand Si,2 von der mindestens einen Düse zu dem mindestens einen Teil des Zielobjekts vom Zeitpunkt ti.2, Geschwindigkeit vi, 1 der mindestens einen Düse vom Zeitpunkt ti,1, Richtung ri,1 der mindestens einen Düse vom Zeitpunkt ti, 1 zu bestimmen.

Der Abstand Si,2 am Zeitpunkt ti,2 kann beispielsweise über den Zwischenschritt mit der Formel (3) bestimmt werden:

$$Sc = vi,1 \cdot (ti,2 - ti,1)$$

$$(3)$$

wobei Sc für die Position der mindestens einen Düse am Zeitpunkt ti,2, vi, 1 für die Geschwindigkeit der mindestens einen Düse am Zeitpunkt ti, 1 steht. Der Zeitpunkt ti, 1 beschreibt den Zeitpunkt der Aufnahme durch die Kamera (Aufzählungspunkt (a'i) bei der Vorrichtung und Schritt (3a'i) beim Verfahren) in Iteration i. Der Zeitpunkt ti,2 steht für den Zeitpunkt nach der Bildverarbeitung (nach den Schritten gemäß Aufzählungspunkt (c'i), (e'i) bei der Vorrichtung und (3c'i), (3e'i) beim Verfahren) in Iteration i (d.h. ein Zeitpunkt in Schritt f in Interation i). Der Abstand Si,2 läßt sich über Sc und dem berechneten Rotationswinkel bestimmen.

Die Geschwindigkeit vi,1 vom Zeitpunkt ti,1 kann beispielsweise durch die Formel (4) bestimmt werden:

den:

$$v_{i,1} = \frac{\delta_{x,y,z}}{t_{i,1} - t_{i-1,1}}$$

$$(4)$$

wobei vi, 1 für die Geschwindigkeit der mindestens einen Düse am Zeitpunkt ti, 1 und δx,y,z für die relative Bildbewegung (durch Bildanalyse bestimmt) steht. Im Nenner der Formel (3) steht die Zeitdifferenz der beiden Aufnahmen vom Zeitpunkt ti, 1 und ti-1,1. Der Zeitpunkt ti,1 hat die gleiche Bedeutung wie bei Formel (3) beschrieben. Der Zeitpunkt ti-1,1 beschreibt den Zeitpunkt der Aufnahme der Kamera (Aufzählungspunkt (a'i-1) bei der Vorrichtung und Schritt (3a'i-1) beim Verfahren) in Iteration i-1. Der Zeitabstand zwischen ti-1,1 und ti, 1 ist so kurz gewählt, daß sich die Aufnahmen überlagern.

Die Richtung ri,1 kann beispielsweise über eine Transformationsmatrix bestimmt werden.

Die oben beschrieben Zeitpunkte t1 und t2 betreffen eine gleiche Iteration. Beim Verfahren sind die oben beschriebenen alternativen Schritte (a'), (c'), (e'), (f), (g'), (h') im dritten Schritt mit (3a'), (3c'), (3e'), (3f), (3g'), (3h') gekennzeichnet..

Eine weitere Ausführungsform der Erfindung betrifft die erfindungsgemäße Vorrichtung die mindestens eine weitere Sensoreinheit umfaßt, die in Richtung des landwirtschaftlichen Feldes auf ein Zielobjekt ausgerichtet ist. Die Rechen- und Steuereinheit ist konfiguriert, diese mindestens eine weitere Sensoreinheit zu veranlassen am Zeitpunkt t1 eine 3D-Punktwolke zu erfassen und die Rechen- und Steuereinheit ist weiter konfiguriert diese 3D-Punktwolke zu empfangen.

Geeignete Sensoreinheiten um eine 3D-Punktwolke zu erfassen sind beispielsweise LIDAR-Sensoren und 3D Kameras. Wenn mehrere 2D Kameras vorhanden sind, kann durch photogrammetrische Analysen (Analysen von Aufnahmen aus verschiedenen Perspektiven) eine 3D-Punktwolke zum Zeitpunkt t1 erstellt werden. Dazu kann man Techniken wie beispielsweise Struktur aus Bewegung ("Structure from Motion", SfM) und die Triangulation verwenden. LIDAR-Sensoren senden Laserstrahlen aus und messen, wie lange die Zeit dauert, bis das reflektierte Licht zurückkehrt. Dies ermöglicht die Erstellung von 3D-Punktwolken mit genauen Entfernungsdaten. 3D-Kameras (z.B. Kinect, RealSense oder andere) erfassen neben den Pixeldaten auch Tiefeninformationen woraus man durch Umwandlung in 3D-Koordinaten eine 3D-Punktwolke erzeugen kann. Eine 3D-Punktwolke ist eine Datenstruktur, die eine Sammlung von dreidimensionalen Punkten im Raum repräsentiert. Jeder Punkt in der Punktwolke wird durch x-,y- und z- Koordinaten beschrieben und kann auch zusätzliche Informationen wie Farbe oder Intensität enthalten.

In einer bevorzugten Ausführungsform der Erfindung ist die Steuer- und Recheneinheit konfiguriert, (in (Schritt (c) bzw. (c') der Vorrichtung und Schritt (3c) bzw. (3c') des Verfahrens) die zumindest eine Pixelkoordinate zumindest einen Teils eines Zielobjektes auf dem landwirtschaftlichen Feld auf die 3D-Punktwolkedaten zu projizieren. Vorzugsweise werden mehrere Pixel des zumindest einen Teils des Zielobjektes (z.B. Pixel der Eckpunkte der "Bounding Boxen" oder eines Umriß-Polygons etc). auf die 3D-Punktwolkedaten projiziert. In einer weiteren bevorzugten Ausführungsform der Erfindung ist die Steuer- und Recheneinheit konfiguriert, die Höhe des Zielobjektes auf dem landwirtschaftlichen Feld mittels der 3D-Punktwolke zu bestimmen, wobei die Distanz zwischen dem vertikal niedrigsten Punkt des Zielobjekts und dem vertikal höchsten Punkt des Zielobjekts in der 3D-Punktwolke berechnet wird. Dabei ist eine Bildanalyse von zumindest einem vollständigen Zielobjekt bevorzugt. In einer weiteren bevorzugten Ausführungsform ist die Rechen- und Steuereinheit konfiguriert, (Aufzählungspunkt (g) oder (g') bei der Vorrichtung und Schritt (3g) oder (3g') beim Verfahren) den Aktivierungszeitpunkt des Sprühvorgangs für die mindestens eine Düse auf mindestens einen Teil des Zielobjekts zumindest teilweise zusätzlich auch auf Basis der Daten der 3D-Punktwolke zum Zeitpunkt t1 zu bestimmen. Vorzugsweise wird dabei auch die berechnete Höhe des Zielobjektes auf dem landwirtschaftlichen Feld berücksichtigt (da sich die Flugzeit der Flüssigkeit in Abhängigkeit der Höhe des Zielobjektes verkürzt oder verlängert).

Bei einer weiteren Ausführungsform der Erfindung ist die Rechen- und Steuereinheit konfiguriert, (Aufzählungspunkt (g) oder (g') bei der Vorrichtung und Schritt (3g) oder (3g') beim Verfahren) für die Bestimmung des Aktivierungszeitpunktes des Sprühvorgangs für die mindestens eine Düse auf mindestens einen Teil des Zielobjekts zumindest teilweise die Latenz der mindestens einen Düse und die Flugzeit der Flüssigkeit von der mindestens einen Düse bis zum Auftreffen auf mindestens einen Teil des Zielobjekts zu berücksichtigen.

Mit den Informationen vom Abstand S2 von der mindestens einen Düse zu dem mindestens einen Teil des Zielobjekts vom Zeitpunkt t2 und der Geschwindigkeit v2 und Richtung r2 der mindestens einen Düse vom Zeitpunkt t2 kann der Düsenöffnungszeitpunkt tA (d.h. der Aktivierungszeitpunkt für die Düsenöffnung welcher in dieser Offenbarung die gleiche Bedeutung hat wie der Aktivierungszeitpunkt des Sprühvorgangs) bestimmt werden. In einer bevorzugten Ausführungsform der Erfindung wird dieser Düsenöffnungszeitpunkt tA noch bezüglich der Latenz der mindestens einen Düse (d.h. die Düsenöffnungslatenz) sowie die Flugzeit der Flüssigkeit von der mindestens einen Düse bis zum Auftreffen auf dem Zielobjekt korrigiert. D.h. Der geplante Düsenöffnungszeitpunkt tP kann durch folgende Formel (5) berechnet werden:

$$tP = tA - LD - tF$$

$$(5)$$

Wobei tP für den geplanten Düsenöffnungszeitpunkt, LD für die Düsenöffnungslatenz der mindestens einen Düse und tF für die Flugzeit der Flüssigkeit von der mindestes einen Düse bis zum Auftreffen auf dem Zielobjekt steht.

LD ergibt sich aus verschiedenen Faktoren wie beispielsweise dem Düsen-Typ und Düsen-Design, dem Flüssigkeitsdruck, der Beschaffenheit der Rechen- und Steuereinheit, der Düsengröße, der Viskosität der Flüssigkeit, dem Wartungszustand der mindestens einen Düse und der Umgebungstemperatur.

tF ergibt sich aus Tropfengeschwindigkeit der Flüssigkeit, die sich wiederum insbesondere nach Flüssigkeitsdruck und mechanischer Düsenbeschaffenheit richtet (und im Labor bestimmt werden kann). Vorzugsweise wird für die Bestimmung von tF auch die berechnete Höhe des Zielobjektes auf dem landwirtschaftlichen Feld berücksichtigt.

In einer weiteren bevorzugten Variante der Erfindung, die Rechen- und Steuereinheit konfiguriert, (in Aufzählungspunkt (g) und (g') bei der Vorrichtung bzw. (3g) und (3g') beim Verfahren) die Dauer der Düsenöffnung zu planen. D.h. die Dauer der Öffnungszustandes der mindestens einen Düse ab dem Düsenöffnungszeitpunkt. Die Dauer der Düsenöffnung richtet sich vorzugsweise nach der Zielobjektgröße: Je nach vertikaler Ausdehnung des Zielobjektes wird basierend auf der Düsengeschwindigkeit berechnet, wie lange ein Düse geöffnet werden muß, um das ganze Zielobjekt vollständig zu behandeln. Vorzugsweise wird daher für die Bestimmung der Dauer der Düsenöffnung auch die berechnete Höhe des Zielobjektes auf dem landwirtschaftlichen Feld berücksichtigt. In einer weiteren bevorzugten Variante wird die Düsenschließlatenz (die oftmals wegen des Drucks größer ist als die Düsenöffnungslatenz) bei der Planung der Dauer der Düsenöffnung mitberücksichtigt.

Die erfindungsgemäße Vorrichtung kann ein Teil eines Sprühgeräts, beispielsweise einer Landmaschine, eines Roboters oder ein Luftfahrzeug (z.B. eine Drohne) sein oder damit verbindbar sein. Eine solches Sprühgerät kann sich autonom in bzw. über einem Feld bewegen oder durch einen Menschen gesteuert werden.

Ausführungsformen der vorliegenden Erfindung sind:

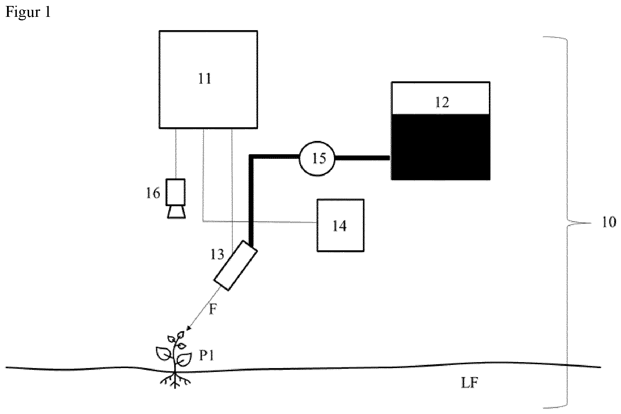

Figur 1 bis Figur 3 zeigen beispielhaft und schematisch eine Ausführungsform der erfindungsgemäßen Vorrichtung und des erfindungsgemäßen Verfahrens.

Figur 1 zeigt die Vorrichtung (10) zum Ausbringen einer Flüssigkeit (F) auf zumindest einen Teil eines Zielobjekts (P1) in einem landwirtschaftlichen Feld (LF). Die Vorrichtung (10) umfaßt eine Rechen- und Steuereinheit (11), mindestens einen Vorratsbehälter (12) zur Aufnahme der Flüssigkeit (F), mindestens eine Düse (13), mindestens eine Positionsbestimmungseinheit (14), Mittel (15) zur Förderung der Flüssigkeit (F) von dem mindestens einen Vorratsbehälter (12) in Richtung der mindestens einen Düse (13), mindestens eine Sensoreinheit (16), die in Richtung des landwirtschaftlichen Feldes (F) auf ein Zielobjekt (P1) ausgerichtet ist. In Figur 1 bewegt sich die Vorrichtung (10) auf das Zielobjekt (P1) zu (d.h. nach links) und die mindestens eine Sensoreinheit (16) befindet sich in der Bewegungsrichtung vor der mindestens einen Düse (13). Die Richtung der Düse (13) ist relativ zur Bodenoberfläche schräg dargestellt. Die Richtung der Düse (13) kann aber auch relativ zur Bodenoberfläche gerade nach unten gerichtet sein.

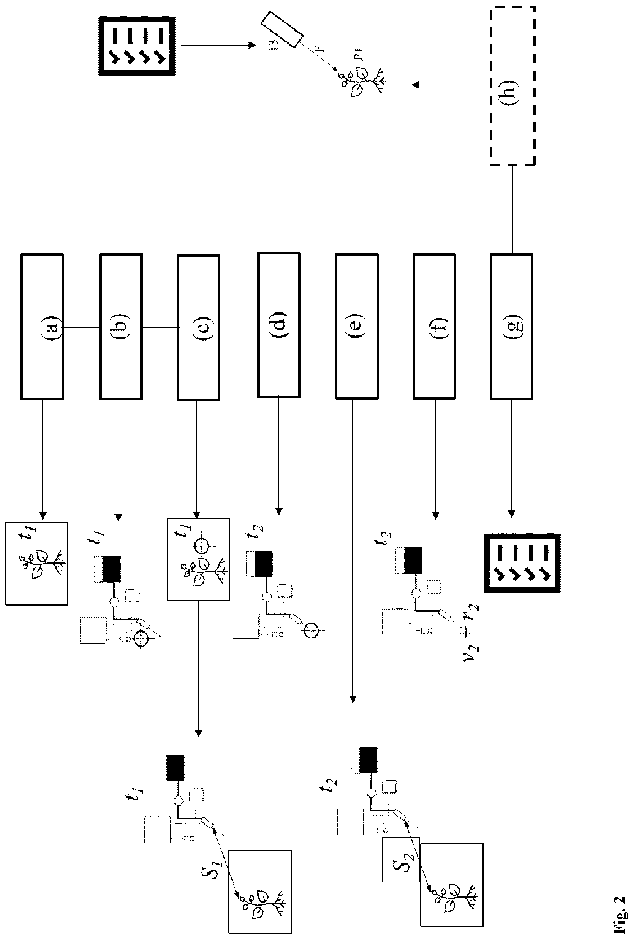

Figur 2 zeigt schematisch die durch die Rechen- und Steuereinheit (11) koordinierten Schritte (a) bis (g) bzw. optional (h). Dies entspricht den Schritten 3a bis 3g bzw. optional 3h beim erfindungsgemäßen Verfahren. Bei (a) ist die Rechen- und Steuereinheit (11) konfiguriert, die mindestens eine Sensoreinheit (16) zu veranlassen am Zeitpunkt t1 mindestens eine Aufnahme zu erzeugen und diese mindestens eine Aufnahme zu empfangen (in Figur 2 ist die Aufnahme als Viereck mit Pflanze dargestellt). In (b) ist die Rechen- und Steuereinheit (11) konfiguriert, die mindestens eine Positionsbestimmungseinheit (14) zu veranlassen am Zeitpunkt t1 die Position der mindestens einen Düse (13) zu bestimmen und diese Positionsdaten zu empfangen (in Figur 2 ist dies schematisch mit einer verkleinerten Version der Vorrichtung (10) aus Figur 1 und einem kleinen Fadenkreuz für die Erfassung der Positionsdaten zum Zeitpunkt t1 dargestellt). In (c) ist die Rechen- und Steuereinheit (11) konfiguriert, durch Bildverarbeitung mindestens einen Teil eines Zielobjekts (P1) auf der mindestens einen Aufnahme zu bestimmen und dieses mindestens eine Zielobjekt (P1) unter Verwendung der Positionsdaten der mindestens einen Sensoreinheit (16) vom Zeitpunkt t1 zu georeferenzieren (in Figur 2 ist dies wiederum durch das kleine Fadenkreuz auf der Aufnahme dargestellt), um den Abstand S1 von der mindestens einen Düse (13) zu dem mindestens einen Teil des Zielobjekts (P1) auf der Aufnahme vom Zeitpunkt t1 zu bestimmen. In (d) ist die Rechen- und Steuereinheit (11) konfiguriert, die mindestens eine Positionsbestimmungseinheit (14) zu veranlassen am Zeitpunkt t2 die Position der mindestens einen Düse (13) zu bestimmen und diese Positionsdaten zu empfangen, wobei der Zeitpunkt t2 ein späterer Zeitpunkt als t1 ist (in Figur 2 ist dies schematisch analog wie in Schritt (b) dargestellt, jedoch am Zeitpunkt t2). In (e) ist die Rechen- und Steuereinheit (11) konfiguriert, den Abstand S2 von der mindestens einen Düse (13) zu dem mindestens einen Teil des Zielobjekts anhand der Positionsdaten der mindestens einen Düse (13) vom Zeitpunkt t2 und der Positionsdaten des mindestens einen georeferenzierten Teils des Zielobjektes auf der Aufnahme vom Zeitpunkt t1 zu bestimmen. In (f) ist die Rechen- und Steuereinheit (11) konfiguriert, die Geschwindigkeit v2 und Richtung r2 der mindestens einen Düse (13) vom Zeitpunkt t2 zumindest teilweise auf Basis der Positionsdaten der mindestens einen Düse (13) vom Zeitpunkt t1 und vom Zeitpunkt t2 zu bestimmen (in Figur 2 ist schematisch eine kleinere Version der Vorrichtung (10) abgebildet, relevant ist aber die Position der mindestens einen Düse (13)). In (g) ist die Rechen- und Steuereinheit (11) konfiguriert, (g) den Aktivierungszeitpunkt des Sprühvorgangs für die mindestens eine Düse (13) auf mindestens einen Teil des Zielobjekts (P1) zumindest teilweise auf Basis des Abstands S2 von der mindestens einen Düse (13) zu dem mindestens einen Teil des Zielobjekts (P1) vom Zeitpunkt t2 und der Geschwindigkeit v2 und Richtung r2 der mindestens einen Düse (13) vom Zeitpunkt t2 zu planen (In Figur 2 ist schematisch ein Plan für diesen Vorgang abgebildet). Im optionalen Schritt (h) ist die Rechen- und Steuereinheit (11) konfiguriert, die mindestens eine Düse (13) zumindest teilweise auf der Basis des geplanten Aktivierungszeitpunktes des Sprühvorgangs zu aktivieren und die Flüssigkeit (F) auf mindestens einen Teil des Zielobjekts (P1) zu applizieren.

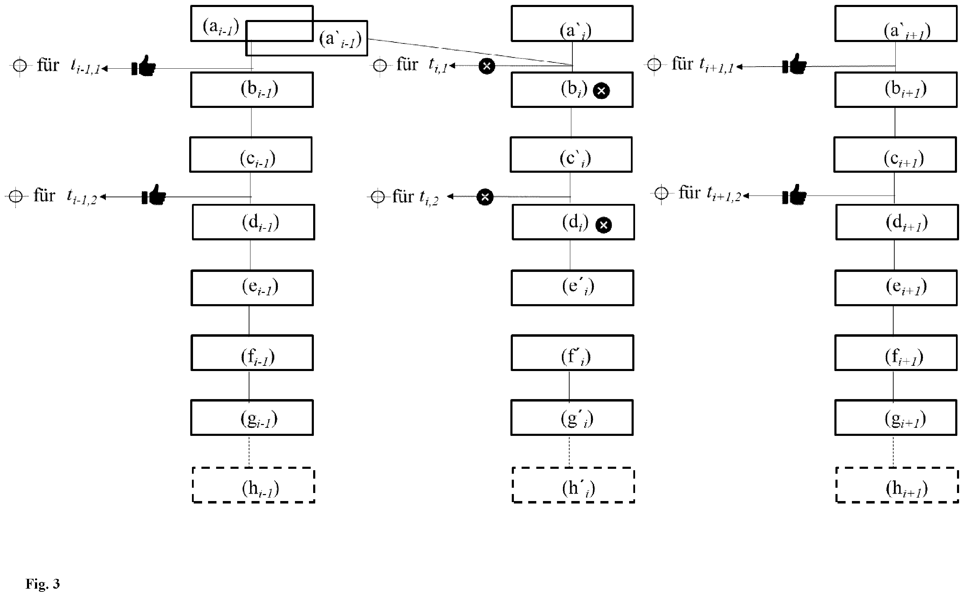

Figur 3 zeigt schematisch die durch die Rechen- und Steuereinheit (11) koordinierten Schritte (a) bis (g) bzw. optional (h) bzw. (a'), (b), (c'), (d), (e'), (f) und (g') und optional (h') in drei aufeinanderfolgenden iterativen Zyklen i-1, i sowie i+1. Dies entspricht den Schritten 3a bis 3g bzw. optional 3h bzw. (3a'), (3b), (3c'), (3d), (3e'), (3f) und (3g') und optional (3h') beim erfindungsgemäßen Verfahren. Im Iterationszyklus i-1 werden die Schritte (ai-1) bis (gi-1) bzw. optional (hi-1) durchgeführt. Die in Schritt (bi-1) und (di-1) (zu Beginn der Durchführung der Schritte) gemessene Signalstärke des GNSS Empfängers hat das vordefinierte Schwellenwertniveau erreicht, so daß die Positionsbestimmung mit dem GNSS Empfänger durchgeführt werden kann. In Iterationszyklus i erreicht die in Schritt (bi) (und optional auch in Schritt (di)) gemessene Signalstärke des GNSS Empfängers nicht das vordefinierte Schwellenwertniveau. Daher werden neben diesen Schritten die Schritte (ai'), (ci'), (ei'), (fi'), (gi') und optional (hi') durchgeführt. Im Iterationszyklus i+1 erreicht die in Schritt (bi+1) und (di+1) gemessene Signalstärke des GNSS Empfängers das Schwellenwertniveau wieder. Daher werden die Schritte (ai+1) bis (gi+1) und optional (hi+1) durchgeführt.

**Patentansprüche**

1.  Vorrichtung (10) zum Ausbringen einer Flüssigkeit (F) auf zumindest einen Teil eines Zielobjekts (P1) in einem landwirtschaftlichen Feld (LF) umfassend

    - eine Rechen- und Steuereinheit (11),
    - mindestens einen Vorratsbehälter (12) zur Aufnahme der Flüssigkeit (F),
    - mindestens eine Düse (13),
    - Mittel (15) zur Förderung der Flüssigkeit (F) von dem mindestens einen Vorratsbehälter (12) in Richtung der mindestens einen Düse (13),
    - mindestens eine Sensoreinheit (16), die in Richtung des landwirtschaftlichen Feldes (F) auf ein Zielobjekt (P1) ausgerichtet ist, und konfiguriert ist mindestens eine Aufnahme zu erzeugen,

- mindestens eine Positionsbestimmungseinheit (14),

wobei die Rechen- und Steuereinheit (11) konfiguriert ist, (a) die mindestens eine Sensoreinheit (16) zu veranlassen am Zeitpunkt $t_1$ mindestens eine Aufnahme zu erzeugen und diese mindestens eine Aufnahme zu empfangen,

wobei die Rechen- und Steuereinheit (11) konfiguriert ist, (b) die mindestens eine Positionsbestimmungseinheit (14) zu veranlassen am Zeitpunkt $t_1$ die Position der mindestens einen Sensoreinheit (16) zu bestimmen und diese Positionsdaten zu empfangen,

wobei die Rechen- und Steuereinheit (11) konfiguriert ist, (c) durch Bildverarbeitung mindestens einen Teil eines Zielobjekts (P1) - falls vorhanden - auf der mindestens einen Aufnahme zu bestimmen und zumindest einen Teil dieses Zielobjekts (P1) unter Verwendung der Positionsdaten der mindestens einen Sensoreinheit (16) vom Zeitpunkt $t_1$ zu georeferenzieren, um den Abstand $S_1$ von der mindestens einen Düse (13) zu dem mindestens einen Teil des Zielobjekts (P1) auf der Aufnahme vom Zeitpunkt $t_1$ zu bestimmen,

wobei die Rechen- und Steuereinheit (11) konfiguriert ist, (d) die mindestens eine Positionsbestimmungseinheit (14) zu veranlassen am Zeitpunkt $t_2$ die Position der mindestens einen Düse (13) zu bestimmen und diese Positionsdaten zu empfangen, wobei der Zeitpunkt $t_2$ ein späterer Zeitpunkt als $t_1$ ist,

wobei die Rechen- und Steuereinheit (11) konfiguriert ist, (e) den Abstand $S_2$ von der mindestens einen Düse (13) zu dem mindestens einen Teil des Zielobjekts anhand der Positionsdaten der mindestens einen Düse (13) vom Zeitpunkt $t_2$ und der Positionsdaten des mindestens einen georeferenzierten Teils des Zielobjektes auf der Aufnahme vom Zeitpunkt $t_1$ zu bestimmen,

wobei die Rechen- und Steuereinheit (11) konfiguriert ist, (f) die Geschwindigkeit $v_2$ und Richtung $r_2$ der mindestens einen Düse (13) vom Zeitpunkt $t_2$ zumindest teilweise auf Basis der Positionsdaten der mindestens einen Düse (13) vom Zeitpunkt $t_1$ und vom Zeitpunkt $t_2$ zu bestimmen,

wobei die Rechen- und Steuereinheit (11) konfiguriert ist, (g) den Aktivierungszeitpunkt des Sprühvorgangs für die mindestens eine Düse (13) auf mindestens einen Teil des Zielobjekts (P1) zumindest teilweise auf Basis des Abstands $S_2$ von der mindestens einen Düse (13) zu dem mindestens einen Teil des Zielobjekts (P1) vom Zeitpunkt $t_2$ und der Geschwindigkeit $v_2$ und Richtung $r_2$ der mindestens einen Düse (13) vom Zeitpunkt $t_2$ zu planen.

2. Vorrichtung (10) nach einem der vorherigen Ansprüche, wobei die Rechen- und Steuereinheit (11) konfiguriert ist, (h) die mindestens eine Düse (13) zumindest teilweise auf der Basis des geplanten Aktivierungszeitpunktes des Sprühvorgangs zu aktivieren und die Flüssigkeit (F) auf den mindestens einen Teil des Zielobjekts (P1) zu applizieren.

3. Vorrichtung (10) nach einem der vorherigen Ansprüche, wobei die mindestens eine Sensoreinheit (16) mindestens eine Kamera umfaßt und vorzugsweise die Kameraachse der mindestens einen Kamera im Wesentlichen senkrecht zum Boden ausgerichtet ist.

4. Vorrichtung (10) nach einem der vorherigen Ansprüche, wobei die Rechen- und Steuereinheit (11) in Schritt (c) konfiguriert ist, die Bestimmung des mindestens einen Teil eines Zielobjektes (P1) auf der Aufnahme mit maschinellem Lernen durchzuführen.

5. Vorrichtung (10) nach Anspruch 4, wobei die Rechen- und Steuereinheit (11) in Schritt (c) konfiguriert ist, die Bestimmung des Abstandes $S_1$ von der mindestens einen Düse (13) zu dem mindestens einen Teil des Zielobjekts (P1) auf der Aufnahme vom Zeitpunkt $t_1$ so durchzuführen, daß zumindest eine Pixel-Koordinate des zumindest einen Teil des Zielobjekts in Positionsdaten auf dem landwirtschaftlichen Feld (LF) umgerechnet wird.

6. Vorrichtung (10) nach Anspruch 5, wobei zur Berechnung der Positionsdaten der zumindest einen Pixel-Koordinate des Zielobjekts (P1) auf dem landwirtschaftlichen Feld (LF) folgende Formeln verwendet werden:

$$S_y = \frac{y}{2H \tan\frac{\alpha_y}{2}} \quad ,$$

$$(1)$$

$$S_x = \frac{x}{2H \tan\frac{\alpha_x}{2}} \quad ,$$

$$(2)$$

wobei in Formel (1) $S_y$ für die Anzahl Pixel pro Einheit Höhe auf dem Bildsensor der Kamera (vertikale Auflösung pro Höheneinheit), $y$ für die vertikale Auflösung der Kamera, $H$ für den Abstand von der Kameralinse zum Boden und $\alpha_y$ für den vertikalen Öffnungswinkel der Kamera steht,

wobei in Formel (2) $S_x$ für die Anzahl Pixel pro Einheit Breite auf dem Bildsensor der Kamera (horizontale Auflösung pro Breiteneinheit), $x$ für die horizontale Auflösung der Kamera, $H$ für den Abstand von der Kameralinse zum Boden und $\alpha_x$ für den horizontalen Öffnungswinkel der Kamera steht,

wobei man ausgehend von der Pixel-Koordinate der zumindest einen Aufnahme über den jeweiligen Kehrwert von $S_y$ und $S_x$ die Positionsdaten der zumindest einen Pixel-Koordinate des mindestens einen Teils des Zielobjektes (P1) auf dem landwirtschaftlichen Feld (LF) berechnet.

7. Vorrichtung (10) nach einem der vorherigen Ansprüche, wobei die Rechen- und Steuereinheit (11) konfiguriert ist, die in den Aufzählungspunkten (a) bis (f) genannten Schritte und die Berechnung der jeweiligen Parameter $S_i$, $t_i$, $v_i$, $r_i$ iterativ ($_i$) durchzuführen und der Aktivierungszeitpunkt des Sprühvorgangs für die mindestens eine Düse (13) auf mindestens einen Teil des Zielobjekts (P1) in dem in Aufzählungspunkt (g) genannten Schritt durch jeden iterativen Schritt gegebenenfalls angepaßt wird.

8. Vorrichtung (10) nach einem der vorherigen Ansprüche, wobei das mindestens eine Positionsbestimmungseinheit (14) mindestens einen GNSS ("Global Navigation Satellite System") Empfänger umfaßt, bevorzugt sind mindestens zwei GNSS-Empfänger und noch bevorzugter umfaßt der mindestens eine GNSS Empfänger eine Moving Baseline Differential GPS Installation.

9. Vorrichtung (10) nach einem der Ansprüche 7 und 8, wobei mindestens zwei Positionsbestimmungseinheiten (14) eingesetzt werden und davon eine Positionsbestimmungseinheit ein GNSS ("Global Navigation Satellite System") Empfänger umfaßt und die zweite Positionsbestimmungseinheit eine visuelle Odometrie-Technologie umfaßt.

10. Vorrichtung (10) nach Anspruch 9, wobei die Rechen- und Steuereinheit (11) konfiguriert ist, vor und/oder während einer Positionsdatenbestimmung mit dem GNSS Empfänger (14) zu überprüfen, ob die Signalstärke des GNSS Empfänger ein vordefiniertes Schwellenwertniveau erreicht oder überschreitet und - falls das vordefinierte Schwellenwertniveau nicht erreicht wird - die Positionsbestimmung von der Positionsbestimmungseinheit zu bestimmen, die eine visuelle Odometrie-Technologie umfaßt.

11. Vorrichtung (10) nach Anspruch 10, wobei bei der Positionsdatenbestimmung auf Basis von der visueller Odometrie-Technologie die Rechen- und Steuereinheit (11) konfiguriert ist, die mindestens eine Sensoreinheit (13) zu veranlassen am Zeitpunkt $t_{i-1,1}$ und $t_{i,1}$ jeweils mindestens eine Aufnahme zu erzeugen und der Zeitabstand zwischen $t_{i-1,1}$ und $t_{i-1}$ so kurz gewählt wird, daß sich die Aufnahmen überlagern (a'), wobei die Rechen- und Steuereinheit (11) konfiguriert ist am Zeitpunkt $t_{i,2}$ - und abweichend von den beschriebenen Schritten in Aufzählungspunkten (c) und (e) bis (g) - in (c', e' und f) zumindest teilweise auf Basis dieser Aufnahmen zumindest eine der Daten ausgewählt aus der Gruppe von Abstand $S_{i,2}$ von der mindestens einen Düse (13) zu dem mindestens einen Teil des Zielobjekts (P1) am Zeitpunkt $t_{i,2}$, die Geschwindigkeit $v_{i,1}$ der mindestens einen Düse (13) vom Zeitpunkt $t_{i,1}$, die Richtung $r_{i,1}$ der mindestens einen Düse (13) vom Zeitpunkt $t_{i,1}$ zu bestimmen und wobei die Rechen- und Steuereinheit konfiguriert ist, (g') den Aktivierungszeitpunkt des Sprühvorgangs für die mindestens eine Düse auf mindestens einen Teil des Zielobjekts zumindest teilweise auf Basis des Abstands $S_{i,2}$ von der mindestens einen Düse zu dem mindestens einen Teil des Zielobjekts vom Zeitpunkt $t_{i,2}$ und der Geschwindigkeit $v_{i,1}$ und Richtung $r_{i,1}$ der mindestens einen Düse vom Zeitpunkt $t_{i,1}$ zu planen.

12. Vorrichtung (10) nach einem der vorherigen Ansprüche, wobei die Vorrichtung (10) mindestens eine weitere Sensoreinheit (16b) umfaßt, die in Richtung des landwirtschaftlichen Feldes (LF) auf ein Zielobjekt (P1) ausgerichtet ist, wobei die Rechen- und Steuereinheit (11) konfiguriert ist, die mindestens eine Sensoreinheit (16b) zu veranlassen am Zeitpunkt $t_1$ eine 3D-Punktwolke zu erfassen und diese 3D-Punktwolke zu empfangen.

13. Vorrichtung 10) nach einem der vorherigen Ansprüche, wobei die Rechen- und Steuereinheit (11) konfiguriert ist, für die Bestimmung des Aktivierungszeitpunktes des Sprühvorgangs für die mindestens eine Düse (13) auf mindestens einen Teil eines Zielobjekts (P1) zumindest teilweise die Latenz der mindestens einen Düse (13) und die Flugzeit der Flüssigkeit (F) von der mindestens einen Düse (13) bis zum Auftreffen auf mindestens einen Teil des Zielobjekts (P1) zu berücksichtigen.

14. Vorrichtung (10) nach einem der vorherigen Ansprüche, die Vorrichtung ein Teil einer Landmaschine, eines Roboters oder eine Drohne ist, oder damit verbindbar ist.

15. Verfahren (100) zum Ausbringen einer Flüssigkeit (F) auf zumindest einen Teil eines Zielobjekts (P1) in einem landwirtschaftlichen Feld (LF) umfassend die Schritte (a) bis (c):

    in Schritt (1) Bewegen einer Vorrichtung zum Ausbringen einer Flüssigkeit (F) auf zumindest einen Teil eines Zielobjekts (P1) in einem landwirtschaftlichen Feld (LF),

in Schritt (2) Fördern einer Flüssigkeit (F) aus mindestens einem Vorratsbehälter (12) in Richtung mindestens einer Düse (13) während des Bewegens,

in Schritt (3a) Veranlassen, daß mindestens eine Sensoreinheit (16) am Zeitpunkt $t_1$ mindestens eine Aufnahme erzeugt und diese mindestens eine Aufnahme an die Rechen- und Steuereinheit (11) weiterleitet,

in Schritt (3b) Veranlassen, daß mindestens eine Positionsbestimmungseinheit am Zeitpunkt $t_1$ die Position der mindestens einen Sensoreinheit (16) bestimmt und diese Positionsdaten an die Rechen- und Steuereinheit (11) weiterleitet,

in Schritt (3c) Bestimmen von mindestens einem Teil eines Zielobjekts - falls vorhanden - auf der mindestens einen Aufnahme durch Bildverarbeitung und Georeferenzieren des mindestens einen Teils des Zielobjektes unter Verwendung der Positionsdaten der mindestens einen Sensoreinheit (16) vom Zeitpunkt $t_1$, um den Abstand $S_1$ von der mindestens einen Düse (13) zu dem mindestens einen Teil des Zielobjekts auf der Aufnahme vom Zeitpunkt $t_1$ zu bestimmen,

in Schritt (3d) Veranlassen, daß die mindestens eine Positionsbestimmungseinheit am Zeitpunkt $t_2$ die Position der mindestens einen Düse (13) bestimmt und diese Positionsdaten an die Rechen- und Steuereinheit (11) weiterleitet, wobei der Zeitpunkt $t_2$ ein späterer Zeitpunkt als $t_1$ ist,

in Schritt (3e) Bestimmen des Abstand $S_2$ von der mindestens einen Düse (13) zu dem mindestens einen Teil des Zielobjekts (P1) anhand der Positionsdaten der mindestens einen Düse vom Zeitpunkt $t_2$ und den Positionsdaten des mindestens einen georeferenzierten Teils des Zielobjektes auf der Aufnahme vom Zeitpunkt $t_1$,

in Schritt (3f) Bestimmen der Geschwindigkeit $v_2$ und der Richtung $r_2$ der mindestens einen Düse (13) vom Zeitpunkt $t_2$ zumindest teilweise auf Basis der Positionsdaten der mindestens einen Düse (13) vom Zeitpunkt $t_1$ und vom Zeitpunkt $t_2$,

in Schritt (3g) Planung des Aktivierungszeitpunktes des Sprühvorgangs für die mindestens eine Düse (13) auf mindestens einen Teil eines Zielobjekts (P1) zumindest teilweise auf Basis des Abstands $S_2$ von der mindestens einen Düse (13) zu dem mindestens einen Teil des Zielobjekts (P1) vom Zeitpunkt $t_2$ und der Geschwindigkeit $v_2$ und Richtung $r_2$ der mindestens einen Düse (13) vom Zeitpunkt $t_2$.

**16.** Verfahren (100) nach Anspruch 15, weiter umfassend

in Schritt (3h) Aktivieren der mindestens eine Düse (13) zumindest teilweise auf der Basis des geplanten Aktivierungszeitpunktes des Sprühvorgangs und Applikation der Flüssigkeit auf mindestens einen Teil eines Zielobjekts (P1).

Figur 1

Fig. 2

$(a_{i-1})$  $(a`_{i-1})$  $(a`_i)$  $(a`_{i+1})$

⊕ für $t_{i-1,1}$  ⊕ für $t_{i,1}$  ⊕ für $t_{i+1,1}$

$(b_{i-1})$  $(b_i)$  $(b_{i+1})$

$(c_{i-1})$  $(c`_i)$  $(c_{i+1})$

⊕ für $t_{i-1,2}$  ⊕ für $t_{i,2}$  ⊕ für $t_{i+1,2}$

$(d_{i-1})$  $(d_i)$  $(d_{i+1})$

$(e_{i-1})$  $(e´_i)$  $(e_{i+1})$

$(f_{i-1})$  $(f´_i)$  $(f_{i+1})$

$(g_{i-1})$  $(g´_i)$  $(g_{i+1})$

$(h_{i-1})$  $(h´_i)$  $(h_{i+1})$

Fig. 3

Europäisches
Patentamt

European
Patent Office

Office européen
des brevets

# EUROPÄISCHER RECHERCHENBERICHT

Nummer der Anmeldung

EP 24 15 1510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 357 332 A1 (BILBERRY SAS [FR]) 8. August 2018 (2018-08-08) * Absätze [0032] - [0057], [0099] - [0105], [0113] - [0115]; Abbildungen * | 1-16 | INV. A01M7/00 |
| | - - - - - | | |
| A | US 2023/112376 A1 (STRNAD MICHAEL [US] ET AL) 13. April 2023 (2023-04-13) * Absätze [0016], [0023], [0027] - [0029]; Abbildungen * | 1-16 | |
| | - - - - - | | |
| A | EP 4 206 841 A1 (BLUE RIVER TECH INC [US]) 5. Juli 2023 (2023-07-05) * Zusammenfassung; Abbildungen * | 1-16 | |
| | - - - - - | | |
| A | US 8 260 507 B2 (SCHUMANN ARNOLD WALTER [US]; HOSTLER HOWARD KEVIN [US] ET AL.) 4. September 2012 (2012-09-04) * Zusammenfassung; Abbildungen * | 1-16 | |
| | - - - - - | | |

RECHERCHIERTE SACHGEBIETE (IPC)

A01M

Der vorliegende Recherchenbericht wurde für alle Patentansprüche erstellt

| Recherchenort | Abschlußdatum der Recherche | Prüfer |
|---|---|---|
| München | 7. Juni 2024 | Vedoato, Luca |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 15 1510

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2024

| Im Recherchenbericht angeführtes Patentdokument | Datum der Veröffentlichung | Mitglied(er) der Patentfamilie | Datum der Veröffentlichung |
|---|---|---|---|
| EP 3357332 A1 | 08-08-2018 | AU 2018215728 A1 | 08-08-2019 |
| | | BR 112019016111 A2 | 14-04-2020 |
| | | CA 3050364 A1 | 09-08-2018 |
| | | EP 3357332 A1 | 08-08-2018 |
| | | EP 3576526 A1 | 11-12-2019 |
| | | ES 2922250 T3 | 12-09-2022 |
| | | US 2020230633 A1 | 23-07-2020 |
| | | WO 2018142371 A1 | 09-08-2018 |
| US 2023112376 A1 | 13-04-2023 | AU 2021246257 A1 | 14-07-2022 |
| | | BR 112022012495 A2 | 11-10-2022 |
| | | CA 3165727 A1 | 07-10-2021 |
| | | CN 115066176 A | 16-09-2022 |
| | | EP 4125353 A1 | 08-02-2023 |
| | | US 2023112376 A1 | 13-04-2023 |
| | | WO 2021198860 A1 | 07-10-2021 |
| EP 4206841 A1 | 05-07-2023 | AU 2022275438 A1 | 13-07-2023 |
| | | EP 4206841 A1 | 05-07-2023 |
| US 8260507 B2 | 04-09-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020120802 A1
- WO 2020120804 A1
- WO 2020229585 A1
- WO 19226869 A1

**In der Beschreibung aufgeführte Nicht-Patentliteratur**

- **M.- IDBELLA et al.** Structure, Functionality, Compatibility with Pesticides and Beneficial Microbes, and Potential Applications of a New Delivery System Based on Ink-Jet Technology. *Sensors*, 2023, vol. 23 (6), 3053